# EUROPEAN PATENT APPLICATION

(11) **EP 1 980 537 A1**
(43) Date of publication of application: **15.10.2008**
(21) Application number: 06757290.9
(22) Date of filing: 13.06.2006
(51) Int. Cl.: C02F 1/30, C02F 1/68

(54) **WATER ACTIVATION APPARATUS**

(30) Priority: 22.12.2005 WO PCT/JP2005/023661
(71) Applicant: Tamura, Kikuo, Koriyama-shi, Fukushima 963-1301 (JP)
(72) Inventor: Tamura, Kikuo, Koriyama-shi, Fukushima 963-1301 (JP)
(74) Representative: Kador, Ulrich
(86) International application number: PCT/JP2006/311855
(87) International publication number: WO 2007/072590

(57) **Abstract**

[PROBLEMS] To provide a water activation apparatus that can efficiently activate water and has a structure which can also be rapidly and simply disposed on existing water supply facilities. [MEANS FOR SOLVING PROBLEMS] A water activation apparatus (1) comprising a pipe body (2), which has an electrically insulating inner pipe wall (21) and is flexible, and a plurality of water activation pieces (3) arranged in series within the pipe body along the length of the pipe, the water activation piece (3) being composed mainly of a mineral and having been molded into a contour shape. The water activation piece is in a columnar form having a predetermined length, and a clockwise turning rifle (33) for turning the direction of flowing water is formed on the outer peripheral face of the column and the inner peripheral face of a water passing port (32). A spacer (4) through which water can pass is interposed as a buffer material between adjacent water activation pieces. In the pipe body, a coating material (24a) composed mainly of graphite or mineral may be coated onto an outer pipe wall (24), or alternatively the outer pipe wall (24) may be covered with a flexible tube (6) containing the main raw material. Further, electricity removing means (5) for grounding of positive ions is disposed on a terminal part on the downstream side of the pipe body.

## Description

### Field of the Invention

The present invention relates to the field of water activation apparatuses to be installed in waterworks for activation of tap water and, in particular, to a water activation apparatus having a structure that cannot limit the installation site thereof with no reduction in the ability to produce activated water.

### Background of the Invention

Rainfall and/or snowfall in mountain areas seep underground to become groundwater and, in due course, to become spring water to form headwaters. In this process, the water becomes reduced, that is, activated by being subjected to the action of far-infrared, negative ions, and/or magnetism by minerals and rocks so that hydrogen-bonded clusters in water molecules are segmentalized or by receiving negative ions (electrons) due to friction between water molecules such as collisions against rocks and falling from waterfalls.

However, such an activated state of water is not maintained for a very long time, resulting in gradual loss of various effects of activated water. For this reason, there have conventionally been put into practical use apparatuses (hereinafter referred to as "water activation apparatuses") that apply the principle of the water activation effect above to reactivate tap water that has lost its activation effect by arranging ball-shaped fired ceramic particles (hereinafter referred to as "ceramic balls") or generating a magnetic field in the internal space of the apparatus and by passing and agitating water through the space to achieve water-flow-induced friction.

For example, there is disclosed a water activation apparatus in which multiple cases each having ceramic balls therein and formed with a water passage hole are housed in a cylindrical chassis that can be interposed into a tap water passage pipe (refer to Patent Document 1, for example).

In addition, there is also disclosed a water activation apparatus in which a group of approximate far-infrared radiation ceramic boards each formed with passage pores are arranged rotatably and in a multilayer manner in a chassis that can be interposed into a tap water passage pipe or the like, as is the case with the invention of Patent Document 1, and in which the ceramic boards are rotated by collision blades formed thereon (refer to Patent Document 2, for example).
Patent Document 1: Japanese Laid-Open Patent Publication No. 2001-058191 (pages 3 to 5 and Fig.1)
Patent Document 2: Japanese Laid-Open Patent Publication No. 2000-107752 (pages 2 to 3 and Fig.1)

### Disclosure of the Invention

### Problems to be solved by the Invention

However, the water activation apparatuses described in the foregoing patent documents must adopt a chassis composed of a hard material such as metal having a certain length for structural reasons such as water activation and maintaining such an activated state of water for long periods of time. Therefore, an appropriate amount of space is required to install such an apparatus, resulting in limiting the installation site thereof. That is, conventional water activation apparatuses include an inflexible chassis and thereby have no flexibility in securing an installation space, whereby at sites with limited space such as existing bathrooms including a toilet and a shower, not only is it difficult to install quickly, but also large-scale installation works may be required or the installation itself may have to be abandoned when it cannot be obtained.

Also, with certain existing apparatuses that use activated water, such as bathrooms with a shower and a washing machine, it may be preferable to increase the temperature of the activated water. From the perspective of space securement, however, it is very difficult to install not only a water activation apparatus but also a heating apparatus in a pipe conduit to such existing apparatuses or in an internal reservoir tank.

Hence, the present invention has been made to solve the above-described problems, and an object thereof is to provide a water activation apparatus having a limited flow path length yet with an efficient water activation effect of segmentalizing hydrogen-bonded clusters in water molecules and a heating effect as well as having a structure quickly and easily installable also in existing water supply facilities.

### Means for Solving the Problems

In order to solve the above-described problems, the present invention is directed to a water activation apparatus arranged as follows. That is, the water activation apparatus includes: a flexible pipe body (2) with at least the inner pipe wall (21) thereof being electrically isolated; and multiple water activation pieces (3) arranged in series within and along the pipe body, the water activation pieces each being composed mainly of a mineral and molded into a contour shape loosely fittable inside the pipe body. Loosely fittable inside the pipe body means in other words that the outer peripheral surface of each water activation piece (3) approximately fitted inside the pipe is separated from the inner pipe wall (21) of the pipe body with a predetermined gap.

The water activation pieces (3) may each be arranged in such a manner as to have a columnar shape with a predetermined length and that the outer peripheral surface thereof is formed with one or more discontinuous or continuous rifling patterns (33) for turning water flow. Also, the water activation pieces (3) may each be arranged in such a manner as to have a water passage port (32) formed in a penetrating manner in a water passage direction. Further, the water activation pieces (3) may each be arranged in such a manner that the inner peripheral surface of the water passage port (32) is formed with one or more discontinuous or continuous rifling patterns (33) for turning water flow. With these additional arrangements, more efficient effects of the present invention can be expected.

Next, in view of contact or collision between multiple water activationpieces arranged in series, buffermeans (4) may be provided integrally or separately at each portion where adjacent water activation pieces (3) are in contact with each other. In the case of arranging the buffer means, buffer materials may be provided integrally with each water activation piece (3) at the contact portions (both end portions if in a columnar shape) of the water activation piece (3). Alternatively, a spacer (4) composed of a member having a buffering feature (e.g. elastic member) may be arranged as buffer means (4) separately from each water activation piece (3). Such a spacer (4) may be interposed for every multiple water activation piece depending on the degree of buffering required, though it is preferable to arrange for every one water activation piece.

Specific examples of such a spacer (4) include: an approximately disk-shaped one formed with an opening (41) and a slit (42) for permitting water passage therethrough; and multiple cut pieces or ball-shaped ones arranged in such a manner as to come into contact with each water activation piece (3) and not to block water passage.
Thus installing buffer means (or buffer members) allows the water activation pieces (3) to be moved smoothly when the pipe body (2) is bent, and can also absorb impact to the water activation pieces (3) due to a water hammer phenomenon as well as prevent the water activation pieces (3) from being damaged and/or abraded by continuous or intermittent contact therebetween.

It is more preferable that the water activation pieces (3) are each arranged in such a manner as to have a columnar shape with a predetermined length and that the outer peripheral surface thereof is formed with one or more continuous rifling patterns (33) for turning water flow when the axis (31) of the columnar body is positioned parallel to the water flow. In addition, the rifling patterns (33) are formed clockwise when viewed from the upstream side.

In addition to the arrangement above, the water activation pieces (3) are each arranged in such a manner as to have a water passage port (32) including the axis (31) bored in the columnar body and that the inner peripheral surface of the water passage port (32) is formed with one or more discontinuous or continuous rifling patterns (33) for turning water flow when the axis (31) of the columnar body is positioned parallel to the water flow. The rifling patterns (33) are also preferably formed clockwise in the water passage port (32), as is the case with the rifling patterns (33) on the outer peripheral surface.

The outer pipe wall (24) of the flexible pipe body (2) may be applied with a coating compound (24a) composed of one or more materials selected from graphite and minerals. The coating compound (24a) is used to emit growth light, part of far-infrared radiation, circumferentially through graphite and/or minerals as main raw materials, having a function of converting vibration energy of flowing water, which is rotated and turned through the water activation pieces (3) within the pipe body (2), into thermal energy.

In addition to the application of the coating compound (24a), the entire pipe body (2) may further be covered with a flexible tube (6) containing the same materials as the coating compound (24a) for emitting growth light. Thus being covered with the flexible tube (6) allows the conversion efficiency from vibration energy of flowing water passing through the pipe body (2) into thermal energy to be further improved.

The thus arranged water activation apparatus (1) according to the present invention includes electricity removing means (5) arranged in the pipe body (2). The electricity removing means (5) is preferably arranged at the terminal part on the downstream side of the water activation apparatus (1).

The electricity removing means (5) includes: a conductive chassis (51) having an inflow port (54a) and an outflow port (55a); a conductive covering body (53) including an insulation material (52) for covering the outer periphery of the chassis (51) and electrically isolated from a water passage pipe (7); and water activation pieces (3) each composed mainly of a mineral, in which the multiple water activation pieces (3) are arranged in series without being in contact with each other along the water passage direction of the chassis (51).

In addition, water activation pieces (3) arranged within the electricity removing means (5) have the same form as that of water activation pieces (3) arranged within the pipe body.

Also, the reference numerals in parentheses used in the Claims and the foregoing Means for Solving the Problems are added as reference based on the reference numerals in the accompanying drawings to facilitate understanding of the arrangements of the invention, and it is a matter of course that the arrangements of the invention should not be limited to the configurations in the drawings.

### Effects of the Invention

In the water activation apparatus according to the present invention, the pipe body has flexibility, that is, a feature bendable to a predetermined curvature by, for example, being formed into a so-called accordion-like shape and/or composed of an elastic material, which offers greater flexibility in pipe conduit design, though pipes often have their respective complex configurations at every installation site, as well as exhibiting an effect of allowing for flexible and impromptu handling for each field site. It is therefore possible to install such an apparatus quickly with no large-scale installation work even at installation sites where quick installation has conventionally been difficult.

Also, as for the water activation pieces arranged inside the water activation apparatus, the rifling patterns formed on the outer peripheral surface and (or) the inner peripheral surface of the water passage port cause the surface area with which flowing water comes into contact to be increased as well as the flowing water to be turned, resulting in a clockwise vortex flow when viewed from the upstream side in the present invention. Consequently, the flowing water can be in contact with the water activation pieces through an increased contact surface area and activated efficiently under the vortex flow state. In particular, vortex flow promotes water activation induced by negative ionization due to collision and friction between water molecules, which can achieve efficient water activation even if the flow path length may be limited and/or the entire flow path may be bent.

Further, in the water activation apparatus, the outer pipe wall of the pipe body may be applied with a coating compound composed mainly of graphite and/or minerals or may be covered with a flexible tube containing graphite and/or minerals. The coating compound and the flexible tube have an effect of emitting growth light, part of far-infrared radiation, circumferentially, converting vibration energy of flowing water, which is in a vortex flow state within the pipe body, efficiently into thermal energy, and heating the flowing water. This heating effect allows for flexible installation also into existing apparatuses that require heating of water, such as bathrooms with a shower and a washing machine, with no additional heating device, whereby flowing water can be activated as well as heated. In particular, apparatuses including a circulation type reservoir tank can achieve an improved heating effect because flowing water passes through the pipe body multiple times.

In addition, the water activation apparatus includes electricity removing means. The electricity removing means is adopted to ground and remove positive ions in flowing water that are ionized through contact with the water activation pieces. Thus installing the electricity removing means promotes negative ionization of flowing water passing through the water activation apparatus and thereby lowers its redox potential accordingly, exhibiting an effect of achieving more efficient water activation.

### Best Mode for Carrying Out the Invention

Specific embodiments of a water activation apparatus 1 (hereinafter referred to as "present apparatus") according to the present invention will hereinafter be described in detail with reference to the accompanying drawings. Fig.1 is a perspective view of the present apparatus partially cut away; Fig.2 is a vertical cross-sectional view of the present apparatus; Fig. 3 is an assembled perspective view of the present apparatus; Fig.4 is a perspective view of the present apparatus partially cut away; and Fig.5 is a perspective view of electricity removing means in the present apparatus partially cut away.

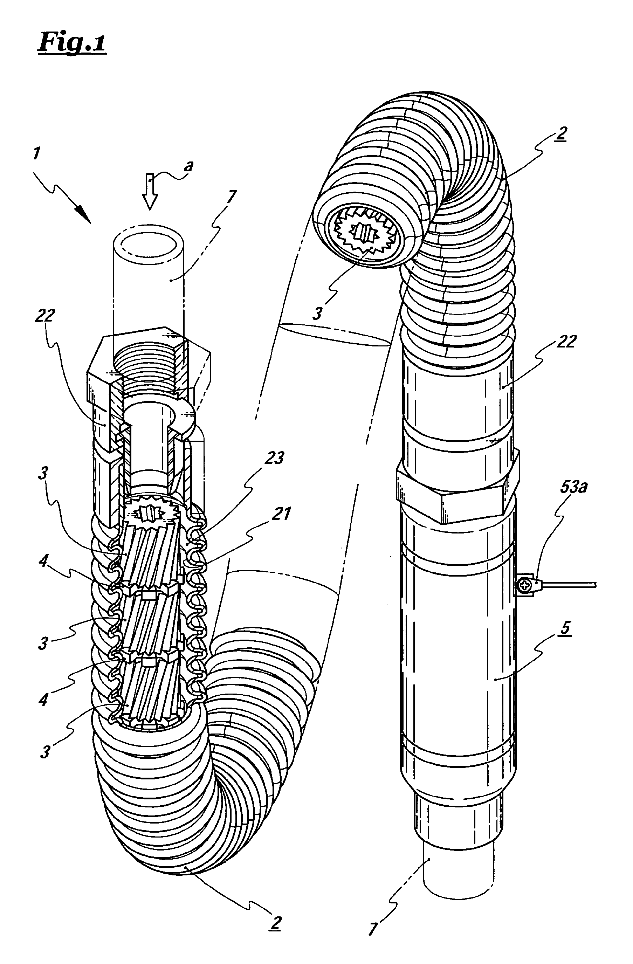

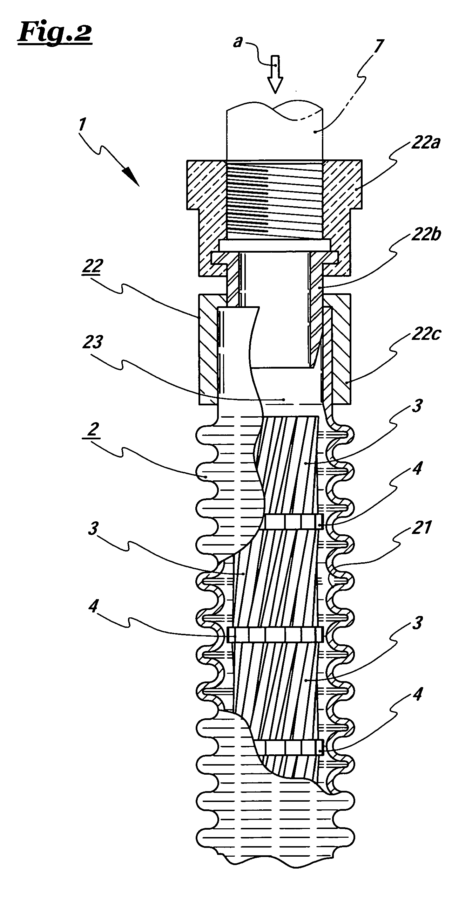

As shown in Figs.1 and 2, the present apparatus 1 has an arrangement that multiple water activation pieces 3 are arranged in series in the internal space 23 of and along the pipe body 2. Also, a spacer 4 as buffer means is arranged in an interposed manner for every one water activation piece 3.

The present apparatus 1 is normally to be installed in the middle of pipe conduits at sites with limited space to have a reduced freedom of installation, such as meter boxes in apartment buildings and kitchens and unit bathrooms in houses. The present apparatus 1 is also to be installed additionally into pipe conduits on existing apparatuses that require heating of water used, such as reservoir tanks in bathrooms with a shower and a washing machine. In addition, in this description, the arrow "a" indicates a water flow direction from a water supply valve or the like, and the upstream and downstream sides are defined based on the water flow direction.

The pipe body 2 has a parallel wavy structure formed on a side surface of a material having electrical insulation and elasticity, such as nylon, to have a flexibility. Also, joints 22 for connection with a water passage pipe 7 and electricity removing means 5 to be described hereinafter are disposed at both end portions of the pipe body 2.

Each joint 22 includes: a socket 22a for water-tight connection (screwing in the present embodiment) with the water passage pipe 7 or electricity removing means 5; an insert 22b with one end being engaged with the socket 22a while the other end being fitted into the pipe body 2; and a holder 22c fitted around the outer periphery of the insert 22b to hold the pipe body 2. The joints 22 are not limited to the arrangement above and existing techniques may be selected and utilized appropriately as long as they can be maintained and connected water-tightly with the pipe body 2. For example, quick couplers may be adopted.

Next, multiple water activation pieces 3, 3, 3, ... are arranged in series in the internal space (pipe conduit) 23 of and along the pipe body 2 with spacers 4 as buffer means being interposed therebetween. Each water activation piece 3 is a burned substance (ceramic) molded by containing, for example, multi-element minerals (minerals containing silicon mainly and many other elements in a balanced manner) and artificial tourmalines as major ingredients, and the exterior thereof has a contour shape loosely fittable to the inner pipe wall 21 of the pipe body 2 while the entirety thereof has an approximately cylindrical shape with a water passage port 32 including an axis 31 bored. Loosely fittable to the inner pipe wall 21 of the pipe body 2 means in other words that a small gap is secured between each piece and the inner pipe wall 21 of the pipe body 2 on its lateral cross-sectional view.
Also, the outer and inner peripheral surfaces of each water activation piece 3 are formed with rifling patterns 33 for turning water flow when the axis 31 is positioned parallel to the water flow. These rifling patterns 33 are formed clockwise when viewed from the upstream side. In addition, the rifling patterns 33 may be formed discontinuously on the outer or inner peripheral surface, though continuous in the present embodiment.

The rifling patterns 33 cause the surface area of each water activation piece 3 to be increased substantially as well as the water flow (indicated by the arrow "a") from the upstream side of the water activation piece 3 to be turned clockwise (indicated by the arrow "b"). Meanwhile, the technical reason for which the rifling patterns 33 are formed clockwise is that it is empirically and experimentally recognized that turning flowing water clockwise increases its water activation effect.

Each spacer 4 interposed between water activation pieces is composed of a synthetic resin material having flexibility and elasticity to serve as buffer means for the water activation pieces 3. Also, a small gap is secured between each spacer 4 and the inner pipe wall 21 of the pipe body 2. Each spacer 4 has a disk shape with a contour shape slightly greater than that of each water activation piece 3, and is formed with an opening 41 at the center thereof and eight radial slits 42 communicating with the outer edge portion.

The arrangement of each spacer 4, that is, having a contour shape greater than that of each water activation piece 3 prevents water activation pieces 3 arranged on either side thereof from being brought into contact with each other, and forming the opening 41 and slits 42 secures a smooth water passage state.
In addition, the spacers 4 are preferably arranged for every one piece to serve as means for securing a bent state of the pipe body 2, for preventing contact between water activation pieces 3, and for absorbing impact to the water activation pieces 3 due to a water hammer phenomenon, but may be arranged for every multiple piece. Also, the shape of each spacer is not limited to disk shape, and may be formed into multiple cut pieces or ball shapes. In this case, the spacers are preferably installed directly at the upper and lower end faces of each water activation piece 3.

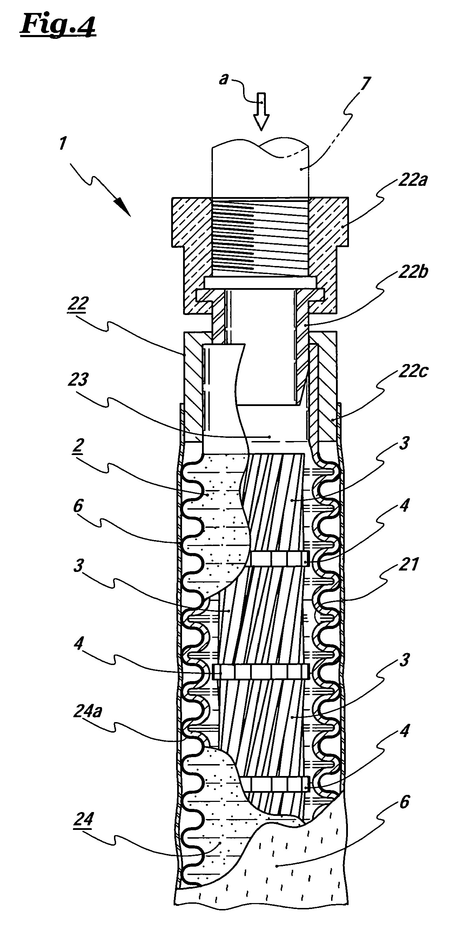

The thus arranged present apparatus 1 may further be arranged in such a manner as to add the following arrangements to the pipe body 2 as appropriate. That is, as shown in Fig.4, the surface of the outer pipe wall 24 of the pipe body 2 may be applied with a coating compound 24a composed of one or more materials selected from graphite and minerals. In addition, the minerals include sedimentary conglomerates such as graphite silica.

The coating compound 24a emits growth light circumferentially. Here, growth light, which is an electromagnetic wave belonging to a wavelength range of 6 to 14µm of far-infrared, has a "resonance absorption effect" by which the vibration of molecules in objects exposed thereto is amplified, and this amplified vibration causes friction increase between molecules to thereby generate frictional heat. In other words, growth light has a function of converting vibration energy of objects exposed thereto (flowing water) into thermal energy to heat it.

The entire pipe body 2 may also be covered with a flexible nylon tube 6 containing one or more materials selected from graphite and minerals for emitting growth light to improve the efficiency of the heating function above. The surface of the flexible tube 6 may be applied with a coating compound composed of the foregoing materials. In addition, existing apparatuses to install the present apparatus 1 adopting such a pipe body 2 include ones that require heating of flowing water, such as bathrooms with a shower and a washing machine.

The electricity removing means 5 is arranged at the terminal part on the downstream side of the present apparatus 1. The electricity removing means 5 includes a conductive chassis 51 composed of a hard material, and in the internal space 57 of the chassis 51, multiple water activation pieces 3 having the arrangements above are arranged in series with spacers 4 being interposed therebetween.

The chassis 51 is formed by covering approximately the entire outer peripheral surface of a metal cylindrical tube having a predetermined length with an electrically insulating material 52 and covering the outer peripheral surface of the insulating material 52 with a conductive tubular covering body 53. The covering body 53 is provided with a ground terminal 53a for grounding positive ions generated in the present apparatus 1.

Further, connection tubes 54 and 55 are fitted to both ends of the chassis 51 to cap the openings water-tightly. This fitting is specified in that electrically insulating rings 56 are fitted between the connection tubes 54 and 55 and the corresponding both end portions of the covering body 53 so that the connection tubes 54 and 55 are electrically isolated from the covering body 53. The connection tubes 54 and 55 are connected in series, respectively, with the present apparatus 1 and the water passage pipe 7, and inflow and outflow ports 54a and 55a are formed on the respective upstream and downstream sides.

In the connection tube 54 on the inflow port side, a male thread 54b for screwing and connecting into one joint 22 of the present apparatus 1 is engraved on the outer peripheral surface of the open end thereof. Meanwhile, in the connection tube 55 on the outflow port side, a female thread 55b for screwing and connecting the water passage pipe 7 is engraved on the inner peripheral surface of the open end thereof.

In the cylindrical internal space 57 of the chassis 51, multiple water activation pieces 3, 3, 3, ... (four pieces in the present embodiment) are arranged, the same as those arranged within the pipe body 2 of the present apparatus 1. Also, spacers 4 are interposed between water activation pieces 3, as is the case with the present apparatus 1.

The electricity removing means 5 is preferably installed additionally, though not an essential component of the present apparatus 1, because it exhibits an effect of grounding and removing positive ions in flowing water that are ionized through contact with the water activation pieces 3 and accordingly increases the ratio of negative ions in the flowing water to further improve its water activation effect.

Since the present apparatus 1 is thus arranged, the flexible pipe body 2 can be bent between water activation pieces 3 arranged in the internal space 23, and therefore the present apparatus can take on various bent states as a whole to have the same feature as so-called flexible tubes. Also, spacers 4 are arranged between the water activation pieces, which can prevent the water activation pieces 3 from being abraded by mutual contact therebetween as well as absorb impact to the water activation pieces 3 due to a water hammer phenomenon.

In addition, when inflow water (indicated by the arrow "a") through the joint 22 of the pipe body 2 passes through the water activation pieces 3, the flow direction is turned clockwise (indicated by the arrow "b") by the rifling patterns 33 formed on the outer peripheral surface of the pieces and the inner peripheral surface of the water passage port 32. Then, the inflow water is turned at every passage through each water activation piece 3 to take on a clockwise vortex flow state in the pipe body and then discharged as outflow water.

The outflow water becomes reduced, that is, takes on a so-called activated state by being subjected to the action of far-infrared from the water activation pieces 3 so that hydrogen-bonded clusters in water molecules are segmentalized and by receiving negative ions generated efficiently due to collision and/or friction between the thus segmentalized water molecules.

The pipe body 2 exhibits not only a flowing water activation effect but also a heating effect if not only applied with a coating compound 24a for emitting growth light but also covered with a flexible tube 6.
Further, since the electricity removing means 5 is installed to ground positive ions generated within the pipe body, the water activation effect is further improved.

Incidentally, activated water generated through the present apparatus 1 obtains various effects as follows.
For example, obtained is a test result where the quality of tap water with a common bacteria concentration of 530 counts/ml and a coliform detection is positive was improved significantly, after about a two-week installation of the present apparatus 1, to a common bacteria concentration of zero counts/ml and coliform was not detectable. There has also been obtained a test result of a water-softening tendency in which the hardness of water decreased from 94ppm to less than 10ppm after about a one-month installation of the present apparatus 1 into a drinking water pipe conduit.
Thus, the use of activated water treated through the present apparatus has potential for enhancement of cooking flavors and efficacy for the human body such as making skin beautiful and moisturized. There has further been found a cleaning effect without the need for chemical cleaner, which is currently attracting significant attention.

### Other Possible Embodiments

Although the present apparatus 1 adopts a pipe body 2 having electrical insulation, it is only required that the inner pipe wall 21 of the pipe body 2 has electrical insulation, and therefore a metal blade may be fitted around the pipe body 2, for example, to improve the protection of the pipe body 2. In this case, the blade is preferably grounded through a ground terminal.

In addition, although the water activation pieces 3 are each formed with concavo-convex rifling patterns 33 on the outer and inner peripheral surfaces thereof, the rifling patterns 33 may be composed of a combination of so-called individual fins. Further, multiple water passage ports 32 may be bored for each water activation piece 3 (e.g. multiple water passage ports may be formed as in artificial coal).

### Brief Description of the Drawings

[Fig.1] A perspective view of the present apparatus partially cut away;
[Fig.2] A vertical cross-sectional view of the present apparatus;

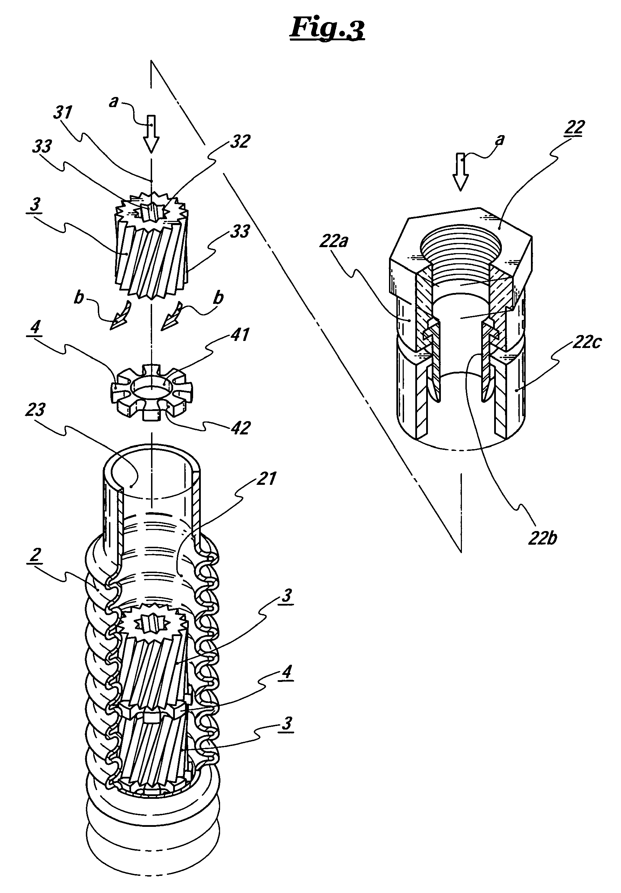

[Fig.3] An assembled perspective view of the present apparatus;
[Fig.4] A perspective view of the present apparatus partially cut away;

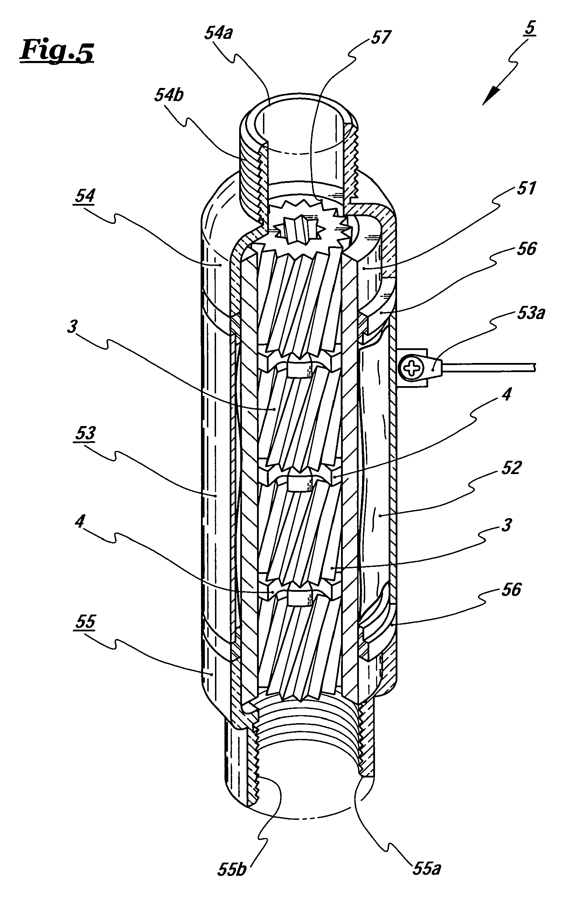

[Fig.5] A perspective view of electricity removing means in the present apparatus partially cut away.

### Description of the Reference Numerals

1: Present apparatus
2: Pipe body
21: Inner pipe wall
22: Joint
22a: Socket
22b: Insert
22c: Holder
23: Internal space
24: Outer pipe wall
24a: Coating compound
3: Water activation piece
31: Axis
32: Water passage port
33: Rifling pattern
4: Spacer
41: Opening
42: Slit
5: Electricity removing means
51: Chassis
52: Insulation material
53: Covering body
53a: Ground terminal
54: Connection tube (on the inflow port side)
54a: Inflow port
54b: Male thread
55: Connection tube (on the outflow port side)
55a: Outflow port
55b: Female thread
56: Insulating ring
57: Internal space
6: Tube
7: Water passage pipe

## Claims

1. A water activation apparatus comprising:
a flexible pipe body (2) with at least the inner pipe wall (21) thereof being electrically isolated; and
a plurality of water activation pieces (3) arranged in series within and along said pipe body, said water activation pieces each being composed mainly of a mineral and molded into a contour shape loosely fittable inside said pipe body.

2. The water activation apparatus according to claim 1, wherein
said water activation pieces (3) are each arranged in such a manner as to have a columnar shape with a predetermined length and that the outer peripheral surface thereof is formed with one ormore discontinuous or continuous rifling patterns (33) for turning water flow.

3. The water activation apparatus according to claim 1 or 2, wherein
said water activation pieces (3) are each arranged in such a manner as to have a water passage port (32) formed in a penetrating manner in a water passage direction.

4. The water activation apparatus according to claim 3, wherein
said water activation pieces (3) are each arranged in such a manner that the inner peripheral surface of said water passage port (32) is formed with one or more discontinuous or continuous rifling patterns (33) for turning water flow.

5. The water activation apparatus according to claim 1, 2, 3, or 4, wherein
buffer means (4) is provided integrally or separately at each portion where adjacent water activation pieces (3) are in contact with each other.

6. The water activation apparatus according to claim 5, wherein
in the case of providing said buffer means separately, a spacer (4) is interposed as buffer means for every one or more water activation pieces (3).

7. The water activation apparatus according to claim 1, wherein
the outer pipe wall (24) of said pipe body (2) is applied with a coating compound (24a) composed of one or more materials selected from graphite and minerals.

8. The water activation apparatus according to claim 1 or 2, wherein
saidpipebody (2) is covered with a flexible tube (6) containing one or more materials selected from graphite and minerals.

9. The water activation apparatus according to claim 1, 2, 3, 4, 5, 6, 7, or 8, further comprising electricity removing means (5) coupled thereto.

10. The water activation apparatus according to claim 9, wherein
said electricity removing means (5) is arranged in such a manner as to comprise:
a conductive chassis (51) having an inflow port (54a) and an outflow port (55a);
a conductive covering body (53) including an insulation material (52) for covering the outer periphery of said chassis (51) and electrically isolated from a water passage pipe (7); and
water activation pieces (3) each composed mainly of a mineral, and wherein
said plurality of water activation pieces (3) are arranged in series without being in contact with each other along the water passage direction of said chassis (51).

11. The water activation apparatus according to claim 10, wherein
water activation pieces (3) arranged within said electricity removing means (5) have the same form as that of water activation pieces (3) arranged within said pipe body.
